# EUROPEAN PATENT SPECIFICATION

(11) **EP 0 524 130 B1**
(45) Date of publication and mention of the grant of the patent: **12.03.1997**
(21) Application number: 92610049.6
(22) Date of filing: 23.06.1992
(51) Int. Cl.: A01D 43/10, A01D 57/26

(54) **Mower with controlled ejection**
Mähmaschine mit regulierbarem Auswurf
Faucheuse avec éjection réglable

(30) Priority: 26.06.1991 DK 1257/91
(43) Date of publication of application: 20.01.1993
(73) Proprietor: JF-FABRIKEN - J. FREUDENDAHL A/S, DK-6400 Sonderborg (DK)
(72) Inventor: Freudendahl, Jorn, DK-6400 Sonderborg (DK); Rasmussen, Laurits, DK-6400 Sonderborg (DK)
(74) Representative: Raffnsöe, Knud Rosenstand

(56) References cited:
- EP-A- 0 332 552
- DE-A- 2 231 624
- DE-A- 3 142 594
- US-A- 3 092 946

## Description

The present invention relates to a mower comprising cutting members, a throwing rotor, side plates providing a swath ejection opening, which is laterally restricted in relation to the length of the throwing rotor, and a hood covering the throwing rotor and projecting backwards beyond same, the mower being of the type which is adjustable so as to be placed in different angular positions relative to the driving direction in order during operation to eject the harvested crop on to the field in a backwards facing direction forming an acute angle with the track of the mower and in a swath lying close to crop harvested during an earlier pasage of the field, the hood extending upwards in the throwing direction of the throwing rotor at an angle V to the horizontal.

A mower of this type is known from EP-A-0 332 552, which describes a mower which can be turned into an oblique position as compared to its driving direction, thus ejecting the swath obliquely to the rear, whereby swath mowed during two different passages of the field can be windrowed so as subsequently to be collected in one work process. The known mowing machine comprises a conditioning rotor after the cutting members and a throwing rotor after the conditioning rotor. The separate throwing rotor is necessary in order to throw the horizontally ejected swath with sufficient strength to achieve the desired effect. The accurate windrowing on the field is controlled by two side plates which are pivotal on a vertical axis for guiding the ejected swath in a sideways direction.

The object of the invention is to provide a mower of the type described hereinbefore which has other or additional means for controlling the windrows of ejected swath in the field.

This is obtained by means of a mower of the type described hereinbefore which is characterized in that a throwing length adjusting plate is arranged at the rear edge of the hood and can be tilted on an axis, the direction of which has a significant horizontal component transversly to the throwing direction, whereby the throwing length is adjusted.

DE-A-31 42 594 discloses a mower with a conditioning rotor and a hood extending over that rotor. During operation the hood may either direct harvested material ejected from the rotor downwards in order to create a narrow swath on the ground immediately behind the mower or the hood may permit the harvested material ejected from the rotor to be spread widely over the field behind the mower. The latter situation is preferably obtained by substituting the rear part of the hood with an upwardly extending and diverging piece with diverging baffle plates underneath that will spread out the harvested material. Alternatively the spreading of the material may be obtained by raising the end piece of the hood. When spreading out the harvested material the conditioning rotor is together with hood put in angular position in relation to the main part of the mower in order to provide for an optimum spread-out, i.e. not to direct the ejected material into the crop still standing.

The angle V is preferably approximately 20°.

The invention is further explained in the following by means of an embodiment with reference to the drawing, in which
Fig 1 shows a lift-suspended mower with oblique ejection during two different passages of the field; and
Fig 2 is a schematical side view of the mower in Fig 1.

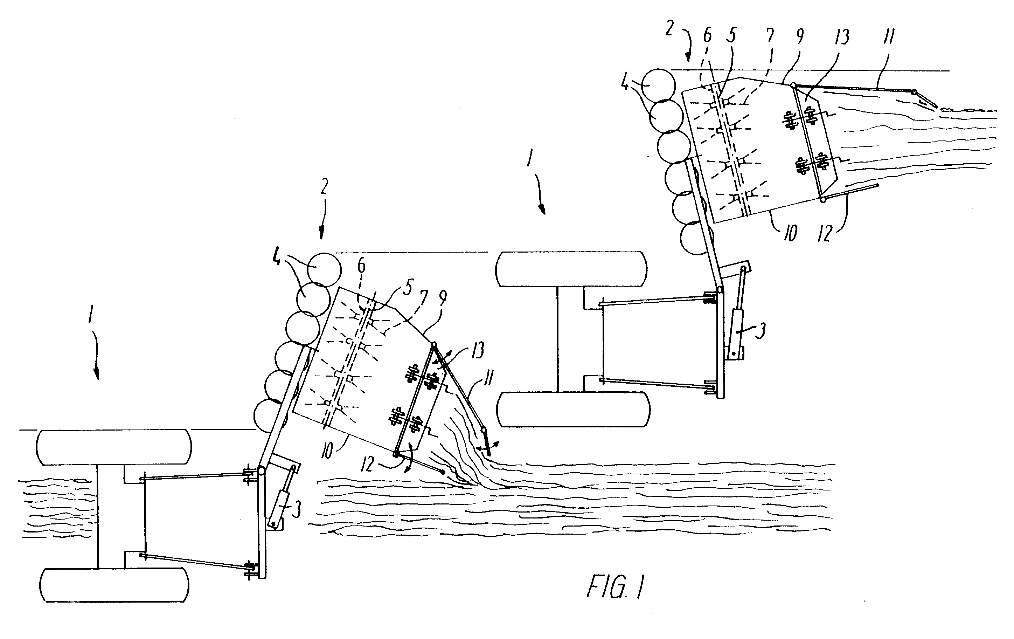

Fig 1 is a schematical view of a tractor which obliquely to the rear carries a lift-suspended mower 2, which by means of a hydraulic cylinder 3 can be turned so as to assume, e.g. the two in Fig 1 shown positions.

The mower 2 comprises a number of mowing members in the form of cutting discs 4 and a conditioning and throwing rotor 5. This comprises a cylindrical core 6, which carries protruding, rigid, elastic fingers 7 arranged in pairs in V. An example of such a rotor can be found in DK-B-159 090. The fingers may be elastic in themselves or they may be resiliently mounted on the cylindrical core 6. The fingers 7 have preferably a straight side and a bevelled side. It is thereby possible to adapt the conditioning and throwing rotor to the actual crop which is to be mowed by turning the fingers 7, so that either the straight og the bevelled side faces forwards in the direction of rotation.

A hood 8 is arranged above and behind the conditioning and throwing rotor 5 and extends upwards at an angle V to horizontal. The mower 2 is further provided with side plates 9 and 10 extending downwards from the hood 8. Each of the plates is provided with control flaps at its rear end. Thus, the side plates 9, 10 are provided with control flaps 11, 12, respectively, which are designed to guide sideways the mowed swath ejected by the conditioning and throwing rotor. The hood 8 is provided with a control flap 13 for control of the throwing range for the ejected mowed swath.

When the mower is operating, it is driven through the field alternating between the two positions shown in Fig 1, i.e. alternately in front of and behind a position transverse to the driving direction. Thereby, the swath is ejected to one side of the track of the mower or the other by turns. The accurate placing of the windrows on the ground is partly controlled by means of the control flaps 11, 12, which control the flow of ejected swath in a sideways direction, partly by means of the control flap 13, which by guiding the flow of ejected swath in a more or less downwards direction controls the throwing length.

In the drawing is shown manual control of the control flap 13 in the form of threaded rods 14 with crank handle 15 but evidently, the control flap 13 may be operated by remote control by means of, e.g. a hydraulic cylinder.

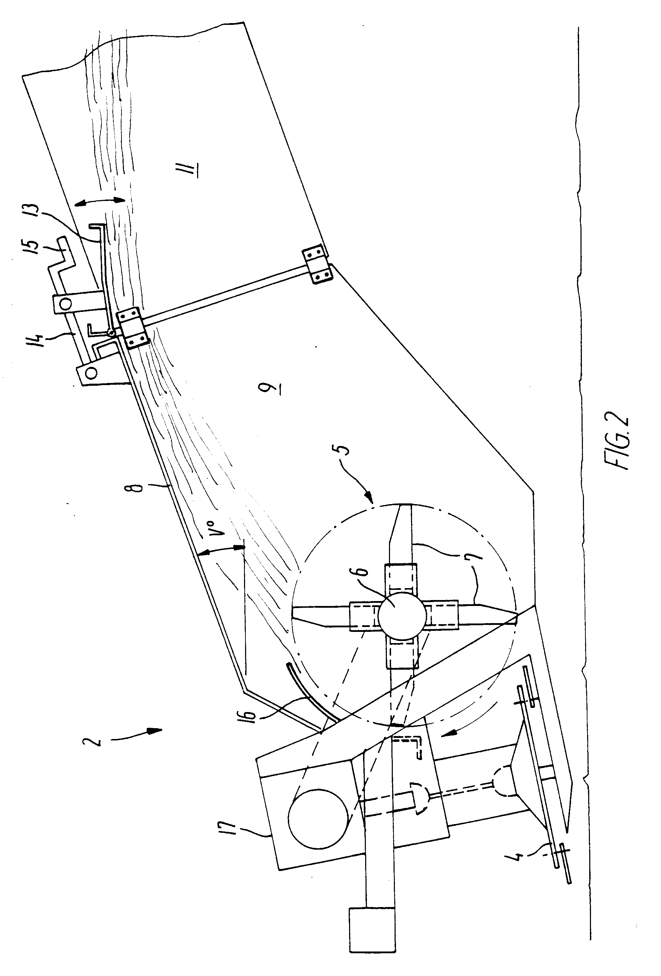

In order to derive full benefit from the adjustment possibility offered by the control flap 13, it is important that the flow of swath is at a certain level above the ground when it reaches the flap. This is obtained by the upwards slanting hood 8, which in the example shown in Fig 2 is further lifted above the conditioning and throwing rotor 5 and the guide plate 16, which surrounds it in part to ensure that the mowed swath is ejected from the conditioning and throwing rotor in the right place.

In addition to the already mentioned elements the mower 2 comprises a power transmission for transfer of the rotational energy partly to the knife discs 4, and partly to the conditioning and throwing rotor 5. The power transmission preferably comprises a variator 17 or is in a different way equipped so as to control the rate of rotation of the conditioning and throwing rotor 5. By controlling this rate and turning the fingers 7 as mentioned with either the straight or the bevelled edge facing forwards, the conditioning and throwing rotor can be adapted to the actual crop which is mowed in order to achieve optimum conditioning and optimum ejection.

It should be understood that albeit the invention is described in connection with a lift-suspended mower it can also be used for a towed mower with supporting wheels.

## Claims

1. A mower comprising cutting members (4), a throwing rotor (5), side plates (9, 10) providing a swath ejection opening, which is laterally restricted in relation the length of the throwing rotor (5), and a hood (8) covering the throwing rotor and projecting backwards beyond same, the mower being of the type which is ajustable so as to be placed in different angular positions relative to the driving direction in order during operation to eject the harvested crop on to the field in a backwards facing direction forming an acute angle with the track of the mower and in a swath lying close to crop harvested during an earlier passage of the field, the hood (8) extending upwards in the throwing direction of the throwing rotor at an angle V to horizontal, **characterized** in that a throwing length adjusting plate (13) is arranged at the rear edge of the hood (8) and can be tilted on an axis, the direction of which has a significant horizontal component transversly to the throwing direction, whereby the throwing length is adjusted.

2. A mower as claimed in claim 1, **characterized** in that the angle V is approximately 20°.

## Patentansprüche

1. Mähmaschine umfassend Schneidwerkzeuge (4), einen Schleuderrotor (5), Seitenbleche (9, 10), die eine im Verhältnis zur Länge des Schleuderrotors (5) seitlich begrenzte Schwadenauswurföffnung ergeben, sowie eine den Schleuderrotor deckende und über diesen nach hinten hinausragende Haube (8), welche Mähmaschine einstellbar ist, so dass sie im Verhältnis zur Fahrrichtung in verschiedene Winkelstellungen plaziert werden kann, damit während des Betriebes das Mähgut auf das Feld in einer Richtung nach hinten geworfen wird, die mit der Spur der Mähmaschine einen spitzen Winkel bildet und in einer Schwade nahe des unter einem früheren Durchfahren des Feldes gemähten Gutes abgelegt wird, wobei sich die Haube (8) in der Auswurfrichtung des Schleuderrotors nach oben und in einem Winkel V zu waagrecht erstreckt, dadurch **gekennzeichnet**, dass bei der hinteren Kante der Haube (8) eine Auswurflängen-Einstellplatte (13) angeordnet ist, die auf einer Achse gekippt werden kann, deren Richtung eine signifikante waagrechte Komponente quer zur Auswurfrichtung aufweist, wodurch die Auswurflänge justiert wird.

2. Mähmaschine nach Anspruch 1, dadurch **gekennzeichnet**, dass der Winkel V etwa 20° ist.

## Revendications

1. Faucheuse comportant des organes de coupe (4), un rotor éjecteur (5), des plaques latérales (9, 10) formant une ouverture d'éjection d'andain, délimitée latéralement par rapport à la longueur du rotor éjecteur (5), et un capot (8) recouvrant le rotor éjecteur et se prolongeant vers l'arrière, derrière celui-ci, ladite faucheuse étant du type réglable de manière pouvoir être placée dans différentes positions angulaires par rapport au sens de conduite afin de permettre, en service, d'éjecter la récolte fauchée sur le champ, dans une direction orientée vers l'arrière, formant en angle aigu avec la trajectoire de la faucheuse, en un andain situé à proximité de la récolte fauchée durant une passe antérieure sur le champ, le capot (8) s'étendant vers le haut dans le sens d'éjection du rotor éjecteur, sous un angle V par rapport à l'horizontale, **caractérisée** en ce qu'une plaque (13) de réglage de portée d'éjection est disposée au bord arrière du capot (8) et peut basculer autour d'un axe dont la direction présente une composante horizontale notable par rapport à la direction d'éjection, la portée d'éjection se trouvant ainsi réglée.

2. Faucheuse selon la revendication 1, **caractérisée** en ce que l'angle V est approximativement de 20°.
